# EUROPÄISCHE PATENTSCHRIFT

(11) **EP 3 426 523 B1**
(45) Veröffentlichungstag und Bekanntmachung des Hinweises auf die Patenterteilung: **01.07.2020**
(21) Anmeldenummer: 17700672.3
(22) Anmeldetag: 18.01.2017
(51) Int. Cl.: B60R 11/02, H04R 1/28, B62J 3/00

(54) **TOP-CASE MIT INTEGRIERTER LAUTSPRECHERANORDNUNG**
TOP CASE COMPRISING AN INTEGRATED LOUDSPEAKER ARRANGEMENT
TOP CASE POURVU D'UN ENSEMBLE HAUT-PARLEUR INTÉGRÉ

(30) Priorität: 11.03.2016 DE 102016204029
(43) Veröffentlichungstag der Anmeldung: 16.01.2019
(73) Patentinhaber: Bayerische Motoren Werke Aktiengesellschaft, 80809 München (DE)
(72) Erfinder: DISCHER, Andre, 85235 Odelzhausen (DE); REINHART, Peter, 82380 Peissenberg (DE); SIEVERS-PAULSEN, Johann, 85354 Freising (DE)
(86) Internationale Anmeldenummer: PCT/EP2017/050924
(87) Internationale Veröffentlichungsnummer: WO 2017/153070

(56) Entgegenhaltungen:
- CN-Y- 2 412 337
- CN-Y- 201 380 910
- JP-A- H05 201 287
- JP-A- 2002 145 154
- JP-A- 2015 089 098
- US-A- 4 915 187
- US-A1- 2012 025 486
- US-B1- 6 298 943

## Beschreibung

Die Erfindung betrifft ein Top-Case für ein Kraftfahrzeug, insbesondere für ein Motorrad oder ein motorradähnliches Kraftfahrzeug, mit einer integrierten Lautsprecheranordnung gemäß dem Oberbegriff des Patentanspruchs 1.

Motorräder mit Lautsprechersystemen sind beispielsweise aus der US 4,915,187 B bekannt. Es wird eine Anordnung von Lautsprechern dargestellt, die in seitlichen Armlehnen für einen Beifahrer, den sogenannten "Sozius", integriert sind. Gemeinsam mit den Armlehnen sind die Lautsprecher an einem auf dem Motorrad montierten Gepäckbehälter, einem sogenannten "Top-Case", befestigt.

Eine ähnliche Anordnung ist ebenfalls in der US 4,600,208 B beschrieben.

Die bekannten Anordnungen weisen üblicherweise mindestens zwei Lautsprecher auf, die paarweise vorgesehen und spiegelsymmetrisch auf beiden Fahrzeugseiten angeordnet sind. Um eine entsprechende Beschallung des Fahrers oder des Sozius bereitzustellen, sind entsprechend leistungsfähige Verstärker mit einer entsprechenden Verkabelung erforderlich, die in der Regel in räumlicher Nähe zu den Lautsprechern und damit oberhalb eines Fahrzeugschwerpunktes angebracht werden müssen.

Dementsprechend ist ein hohes Gesamtgewicht des Lautsprechersystems besonders nachteilig, da sich dieses aufgrund der ungünstigen Lage oberhalb des Schwerpunktes unmittelbar und negativ auf das Fahrverhalten des Fahrzeugs auswirkt. Außerdem bedingen derartige Anordnungen einen entsprechend hohen Material- und Montageaufwand sowie damit verbundene hohe Kosten.

Weitere Lautsprecheranordnungen sind beispielsweise aus der US 2012/025486 A1, JP 2015 089098 A, CN 201 380 910 Y, US 6 298 943 B1, JP 2002 145154 A, JP H05 201287 A, CN 2 412 337 Y und US 4 915 187 A bekannt. Die Schrift US 2012/025486 zeigt ein Top-Case für ein Kraftfahrzeug, insbesondere ein Motorrad oder ein motorradähnliches Kraftfahrzeug, mit den Merkmalen der Präambel des Anspruchs 1.

In Anbetracht des Stands der Technik ist es die Aufgabe der Erfindung, die genannten Nachteile möglichst zu reduzieren und eine kompakte und leichte Lautsprecheranordnung für ein Motorrad oder ein motorradähnliches Kraftfahrzeug bereitzustellen.

Diese Aufgabe wird gelöst mit einem sogenannten "Top-Case" mit den Merkmalen des Patentanspruchs 1. Vorteilhafte Ausführungsformen ergeben sich aus den hiervon abhängigen Patentansprüchen.

Demnach wird ein sogenanntes "Top-Case" für ein Kraftfahrzeug, insbesondere ein Motorrad oder ein motorradähnliches Kraftfahrzeug bereitgestellt, umfassend eine integrierte Lautsprecheranordnung mit einem Lautsprechergehäuse und mindestens einem Lautsprecher, wobei das Top-Case zumindest abschnittsweise das Lautsprechergehäuse bildet. Außerdem umfasst das Lautsprechergehäuse einen mit einer Rückseite des Lautsprechers luftleitend verbundenen hornförmigen Kanal.

Als Top-Case wird üblicherweise ein Behälter bezeichnet, der zur Aufnahme von Gepäckstücken vorgesehen und hierzu auf einem Motorrad oder einem motorradähnlichen Fahrzeug montierbar ist, insbesondere auf einem Gepäckträger oder einer anderen geeigneten Aufnahme. Das Top-Case ist entsprechend von seitlich am Fahrzeug montierten Koffern oder Taschen zu unterscheiden.

Als motorradähnliche Fahrzeuge sind beispielsweise, jedoch keinesfalls abschnließend, sogenannte Scooter, zweirädrige, dreirädrige oder vierrädrige Motorroller, sowie Trikes und Quads zu verstehen.

Die Lautsprecheranordnung ist derart in dem Top-Case integriert, dass das Top-Case gleichzeitig das Lautsprechergehäuse bildet. Vereinfacht dargestellt, dienen Wandungen des Top-Case gleichzeitig als Wandung des Lautsprechergehäuses und definieren dementsprechend - je nach gewählter Formgebung - ein oder mehrere Klangvolumina. An oder in dem Lautsprechergehäuse können ein oder mehrere Lautsprecher befestigt werden. Beispielsweise umfasst das Lautsprechergehäuse eine oder mehrere Lautsprecheraufnahmen zur Befestigung des einen oder der Mehrzahl von Lautsprechern.

Zusätzlich ist der hornförmige Kanal vorgesehen, der mit der Rückseite des mindestens einen Lautsprechers luftleitend verbundenen ist. Hierzu kann zum Beispiel ein von der Lautsprecheraufnahme definierter Aufnahmeraum, in den zumindest eine Rückseite des Lautsprechers eingreift, gegenüber dem hornförmigen Kanal geöffnet ausgestaltet sein. Auf diese Weise wird eine gemeinsame durchgängige Luftsäule, und damit die beschrieben Luftleitung, zur optimalen Schallübertragung bereitgestellt. Mit Hilfe dieser Anordnung kann die Wirkungsweise eines sogenannten "Back Loaded Horn Systems" erzielt und in das Top-Case integriert werden, wodurch sich ein Schalldruck sowie der Wirkungsgrad des mindestens einen Lautsprechers deutlich erhöhen lässt.

Im Umkehrschluss ergibt sich, dass die Anzahl der Lautsprecher gegenüber bekannten Systemen entsprechend reduziert werden kann, um dennoch eine vergleichbare Beschallung eines Fahrzeugnutzers, zum Beispiel des Fahrers oder des Sozius, zu erreichen.

Je nach Ausführungsform der Lautsprecheranordnung kann bereits ein einzelner Lautsprecher ausreichend sein. Demzufolge kann auf einen zweiten, zusätzlichen Lautsprecher verzichtet und eine zugehörige Verstärkerunterstützung reduziert werden, wodurch dessen entsprechendes Gewicht und ein Montageaufwand entfallen. Aufgrund der Anordnung des Top-Case in einem Bereich oberhalb des Fahrzeugschwerpunktes wirkt sich eine hierdurch reduzierte Masse der Lautsprecheranordnung unmittelbar und positiv auf ein Fahrverhalten des Fahrzeuges aus.

Beispielsweise kann der hornförmige Kanal zumindest einen Rohrabschnitt und einen zu einer Austrittsöffnung des hornförmigen Kanals hin aufgeweiteten Hornabschnitt umfassen. Ein Eingang des Rohrabschnittes ist vorzugsweise der Rückseite des Lautsprechers beziehungsweise dem Aufnahmeraum der zugehörigen Lautsprecheraufnahme zugewandt und mit diesem luftleitend verbunden, um - wie beschrieben - eine durchgängige Luftsäule zur Schallübertragung bereitzustellen. Ein Schalldruck des auf der Rückseite des Lautsprechers emittierten Rückschalls kann somit auf eine in dem Rohrabschnitt vorhandene Luftsäule übertragen werden. Der Rohrabschnitt mündet in seinem weiteren Verlauf in den Hornabschnitt, der sich entlang seines Verlaufs bis hin zu der Austrittsöffnung am entfernten Ende des Hornabschnitts aufweitet und analog zu Musikinstrumenten auch als "Becherabschnitt" bezeichnet werden kann. Dies bedeutet, dass der Hornabschnitt entlang seiner Erstreckung eine Querschnittserweiterung aufweist, so dass an einem dem Rohrabschnitt zugewandten ersten Ende des Hornabschnitts ein kleinerer Querschnitt vorgesehen ist, als ein Austrittsquerschnitt an einem dem ersten Ende entgegengesetzten zweiten (offenen) Ende, an dem die Austrittsöffnung vorgesehen ist.

Des Weiteren kann zumindest der Rohrabschnitt des hornförmigen Kanals im Wesentlichen parallel zu einer Vorderseite des Top-Case ausgerichtet sein. Im verbauten Zustand des Top-Case am Fahrzeug ist damit der hornförmige Kanal quer zur vorgesehenen Fahrzeuglängsrichtung des Kraftfahrzeugs ausgerichtet.

Zusätzlich ist es möglich, dass der mindestens eine Lautsprecher im Bereich einer ersten Seite des Top-Case und eine Austrittsöffnung des hornförmigen Kanals im Bereich einer der ersten Seite entgegengesetzt angeordneten zweiten Seite des Top-Case angeordnet sind. Entsprechend steht der (oder die) Lautsprecher auf der ersten Seite des Top-Case als Schallquelle(n) bereit, um beispielsweise den Fahrer oder Sozius zu beschallen. Mit Hilfe des hornförmigen Kanals wird zusätzlich der Rückschall des Lautsprechers genutzt und über den hornförmigen Kanal auf die zweite Seite des Top-Case umgeleitet. Dort tritt der umgeleitete Rückschall aus der Austrittsöffnung aus, um auch von dieser Seite den Fahrer oder Sozius zu beschallen.

Als Bereiche der ersten und zweiten Seite des Top-Case sind nicht nur dessen linke und rechte seitlichen Oberflächen zu verstehen. Vielmehr sind zu den seitlichen Bereichen ebenso ein linker und rechter Seitenbereich der Vorderseite, beispielsweise links und/oder rechts von einer Rückenlehne des Sozius, zu verstehen. Zu den seitlichen Bereichen zählen explizit eventuell vorgesehene Seitenwangen zur seitlichen Stützung des Sozius, in denen der mindestens eine Lautsprecher einerseits und die Austrittsöffnung andererseits angeordnet sein können.

Jedenfalls ermöglicht der hornförmige Kanal den Lautsprecher lediglich einseitig vorzusehen und dennoch eine beidseitige Beschallung zu erreichen. Auf einen eigenen (zusätzlichen) Lautsprecher auf der zweiten Seite kann demnach verzichtet werden, ebenso wie auf einen zugehörigen Verstärker und die entsprechende Verkabelung.

Es versteht sich, dass anstelle des beschriebenen einen Lautsprechers auf der ersten Seite auch mehrere Lautsprecher auf dieser ersten Seite vorgesehen werden und gemeinsam mit dem hornförmigen Kanal verbunden sein können.

Ebenso kann das Top-Case mehr als eine der beschriebenen Kombinationen, bestehend aus einem oder mehreren Lautsprechern und einem zugehörigen hornförmigen Kanal, aufweisen. Hierbei sind mindestens einer oder mehrere der hornförmigen Kanäle gemäß dieser Beschreibung ausgeführt.

Gemäß einer weiteren Ausführungsform kann das Lautsprechergehäuse eine Druckkammer umfassen. Diese wird durch ein Volumen definiert, welches ebenfalls von dem Lautsprechergehäuse gebildet wird und zumindest gegenüber dem Lautsprecher, insbesondere gegenüber der Rückseite des Lautsprechers, geöffnet ist. Dies bedeutet, dass auch die Druckkammer gegenüber dem Aufnahmeraum der Lautsprecheraufnahme geöffnet ausgeführt ist. Vorzugsweise ist die Druckkammer parallel zu dem hornförmigen Kanal angeordnet und durch eine Trennwand von diesem abgetrennt. Eine derartige Anordnung kann besonders einfach und platzsparend erzeugt und in dem Top-Case integriert werden.

Gemäß einer weiteren Ausführungsform kann das Lautsprechergehäuse zumindest abschnittsweise durch eine Innenschale und eine mit der Innenschale verbundene Außenschale gebildet werden, insbesondere eine mittels Spritzguss hergestellte Innenschale und/oder Außenschale. Dies bedeutet, dass zumindest die beiden Schalen, die Innenschale und die Außenschale, gemeinsam das Lautsprechergehäuse oder zumindest einen Abschnitt des Lautsprechergehäuses bilden. Hierzu werden die beiden Schalen aneinandergefügt, um gemeinsam ein Klangvolumen des Lautsprechergehäuses zu bilden. Lediglich optional können die beiden Schalen gegeneinander abgedichtet werden, um einen unerwünschten Luftaustritt zwischen den beiden Schalen zu verhindern, beispielsweise mit entsprechend angeordneten Gummidichtungen. Eine Herstellung der Innenschale und/oder der Außenschale kann mittels Spritzguss erfolgen, so dass eine Formgebung besonders einfach und ein Gewicht der jeweiligen Schale möglichst gering ausfallen.

Des Weiteren kann die Innenschale einstückig mit einem Deckelelement oder einem Bodenelement des Top-Case ausgebildet sein. Dies bedeutet, dass die Innenschale einteilig und materialeinheitlich mit dem Deckelelement oder alternativ mit dem Bodenelement hergestellt ist. Dies wird beispielsweise durch eine Herstellung mittels Spritzguss als ein Spritzgussteil erreicht. Es kann auf diese Weise ein hoher Integrationsgrad erzielt und auf doppelte Wandungen verzichtet werden, wie es bei einer einfachen Befestigung der Innenschale an einem separat hergestellten Deckelelement oder Bodenelement der Fall wäre. Doch auch diese Befestigungsvariante ist grundsätzlich möglich und kann mittels einer stoffschlüssigen und/oder kraftschlüssigen und/oder formschlüssigen Verbindung der Innenschale mit dem Deckelelement oder dem Bodenelement erzielt werden.

Jedenfalls kann das gesamte Lautsprechergehäuse entweder mit dem Deckelelement oder dem Bodenelement des Top-Case verbunden und gemeinsam Teil einer "Deckelanordnung" beziehungsweise einer "Bodenanordnung" sein.

Als Deckelelement ist beispielsweise ein schalenförmiger Deckel des Top-Case zu verstehen, welcher mittelbar oder unmittelbar über ein Scharnier drehbeweglich mit dem Bodenelement, beispielsweise einer schalenförmigen Bodenwanne, ausgebildet ist und gemeinsam einen Innenraum des Top-Case zur Gepäckaufnahme umschließen.

Es versteht sich, dass das Bodenelement und/oder das Deckelelement jeweils mehrwandig, beispielsweise mit einer Innenwand und einer die Innenwand umgebenden Außenwand, ausgeführt sein können. Demensprechend kann die Innenschale des Lautsprechergehäuses einstückig mit lediglich einer der mehreren Wände, also zum Beispiel nur mit der jeweiligen Innenwand oder der Außenwand, oder beiden Wänden einstückig ausgebildet sein.

Des Weiteren kann die Außenschale mindestens ein integriertes Scharnierteil umfassen, welches zur drehbeweglichen Verbindung mit einem Scharniergegenstück des Bodenelements oder des Deckelelements des Top-Case ausgebildet ist. Dies bedeutet, dass die entweder der Deckelanordnung oder der Bodenanordnung zugeordnete Außenschale des Lautsprechergehäuses ein oder mehrere Scharnierteile umfassen kann, mittels derer die Außenschale mit dem jeweils gegenüberliegenden Element des Top-Case, also entweder dem Bodenelement oder dem Deckelelement, drehbeweglich verbunden ist und hierzu mit einem dort angeordneten Scharniergegenstück ein gemeinsames Scharnier bilden. Auf diese Weise wird ein Integrationsgrad erhöht, der einen besonders einfachen und kompakten Aufbau des Top-Case ermöglicht.

Gemäß einer bevorzugten Ausführungsform ist der mindestens eine Lautsprecher ein Tieftonlautsprecher, insbesondere ein Tieftonlautsprecher mit einem Frequenzbereich f ≤ 400 Hz, vorzugsweise f ≤ 150 Hz. Schall mit derart tiefen Frequenzen lässt sich besonders vorteilhaft mittels des hornförmigen Kanals leiten.

Es versteht sich, dass zusätzlich zu dem mindestens einen Lautsprecher weitere Zusatzlautsprecher in oder an dem Top-Case vorgesehen werden können, die jedoch nicht in Verbindung mit dem hornförmigen Kanal stehen, insbesondere Mitteltonlautsprecher oder Hochtonlautsprecher. Zum Beispiel werden diese Zusatzlautsprecher paarweise vorgesehen und jeweils spiegelsymmetrisch im Bereich der ersten Seite und im Bereich der zweiten Seite des Top-Case angeordnet.

Weiterhin kann das Top-Case eine Rückenlehnen-Anordnung für den Fahrzeugnutzer umfassen, wobei die Rückenlehnen-Anordnung die Außenschale zumindest abschnittsweise oder vollständig abdeckt. Dies bedeutet, dass das Top-Case eine integrale Einheit von Gepäckraum, Lautsprecheranordnung und Rückenlehnen-Anordnung darstellt, und somit besonders einfach und kompakt ausgebildet sein kann.

Die Erfindung wird nachfolgend anhand eines Ausführungsbeispiels unter Bezugnahme auf die Zeichnungen näher erläutert. Es zeigen:
- Fig. 1: eine Vorderseite eines Top-Case gemäß der Beschreibung in Frontalansicht,
- Fig. 2: ein mit einem Deckelelement des Top-Case verbundenes Lautsprechergehäuse,
- Fig. 3: eine frontale Schnittansicht des integrierten Lautsprechergehäuses,
- Fig. 4: eine geschnittene Draufsicht des Deckelelements und des integrierten Lautsprechergehäuses,
- Fig. 5: eine geschnittene Seitenansicht des Deckelelements und des integrierten Lautsprechergehäuses.

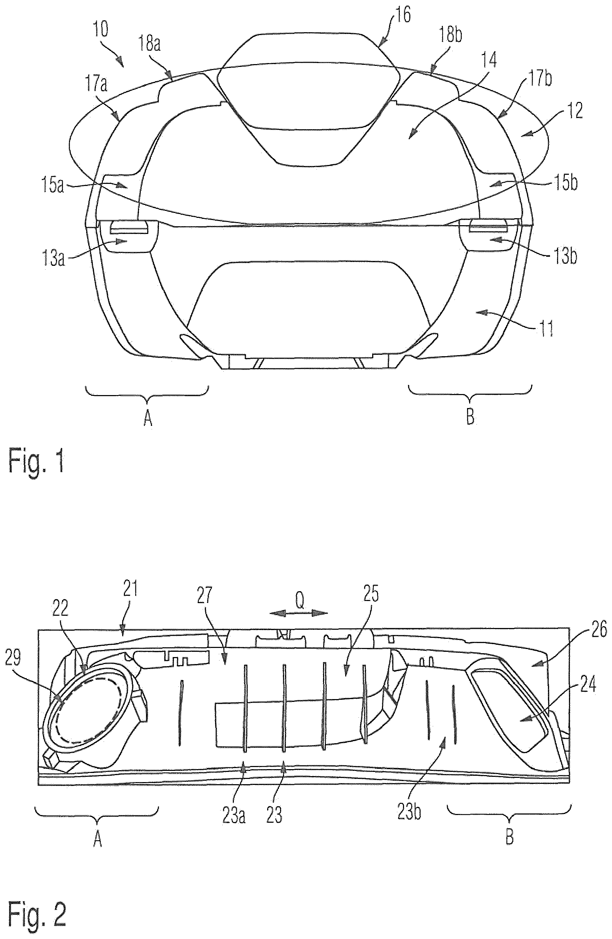

In Fig. 1 ist eine Vorderseite eines sogenannten "Top-Case" 10 in Frontalansicht dargestellt. Hierbei handelt es sich um ein auf einem Motorrad oder einem motorradähnlichen Kraftfahrzeug befestigbares Gepäckbehältnis, welches üblicherweise eine das Gepäck aufnehmende Bodenanordnung, hier gebildet durch ein schalenförmiges Bodenelement 11, und eine das Gepäck abdeckende Deckelanordnung 12 umfasst. Die Deckelanordnung 12 ist mittels Scharnieren 13a,13b an dem Bodenelement 11 drehbeweglich zum Öffnen und Schließen des Top-Case 10 verbunden. Deckelanordnung 12 und schalenförmiges Bodenelement 11 definieren in geschlossenem Zustand des Top-Case 10 ein Aufnahmevolumen für das Gepäck.

Die dargestellte Vorderseite des Top-Case 10 weist im verbauten Zustand des Top-Case 10 üblicherweise in Fahrtrichtung beziehungsweise in die Fahrzeuglängsrichtung des Fahrzeugs und ist damit unmittelbar hinter einem Sozius angeordnet. Zusätzlich umfasst die Vorderseite der Deckelanordnung 12 eine ergonomisch ausgeformte Rückenlehnen-Anordnung, welche eine Rückenlehne 14 und zwei seitlichen Wangen 15a,15b zur Unterstützung des Sozius, sowie optional ein zusätzliches Polster 16 aufweist.

In den beiden seitlichen Wangen 15a,15b ist jeweils eine Öffnung 17a,17b zum Schallaustritt einer hinter der Rückenlehne 14 in die Deckelanordnung 12 des Top-Case 10 integrierten Lautsprecheranordnung 20 (siehe Fig. 2 bis 5) vorgesehen.

Zusätzlich und ebenfalls optional können zu beiden Seiten des Polsters 16 im Bereich einer Oberseite der Deckelanordnung 12 jeweils mindestens ein als Hoch- und/oder Mitteltöner ausgeführter Zusatzlautsprecher 18a,18b angeordnet sein. Diese sind vorzugsweise jedoch nicht Teil der beschriebenen Lautsprecheranordnung 20 beziehungsweise des Lautsprechergehäuses 21.

Fig. 2 zeigt in einer Detailansicht der Fig. 1 die in die Deckelanordnung 12 des Top-Case 10 integrierte Lautsprecheranordnung 20. Diese ist sichtbar, sobald die in Fig. 1 gezeigte Rückenlehnen-Anordnung 14 von der Lautsprecheranordnung 20 entfernt wird. Der Übersichtlichkeit halber ist lediglich das Lautsprechergehäuse 21 der Lautsprecheranordnung 20 dargestellt. Die Position eines mit dem Lautsprechergehäuse 21 verbindbaren Lautsprechers 29 ist lediglich schematisch angedeutet und durch eine hierzu vorgesehene Lautsprecheraufnahme 22 gekennzeichnet. Der Lautsprecher 29 kann in die Lautsprecheraufnahme 22 eingesetzt werden, wobei eine Lautsprechervorderseite aus der Bildebene herausweisend ausgerichtet ist.

Das Lautsprechergehäuse 21 umfasst einen mit einer Rückseite des Lautsprechers 29 luftleitend verbundenen hornförmigen Kanal 23. Dieser 23 weist einen Rohrabschnitt 23a und einen zu einer Austrittsöffnung 24 aufgeweiteten Hornabschnitt 23b auf. Zumindest der Rohrabschnitt 23a des hornförmigen Kanals 23 ist quer (Querrichtung Q) zur vorgesehenen Fahrzeuglängsrichtung des Kraftfahrzeugs ausgerichtet. Dies bedeutet, dass zumindest der Rohrabschnitt 23a im Wesentlichen parallel zu der Vorderseite des Top-Case 10 verläuft. Auch der Hornabschnitt 23b ist im Wesentlichen in dieser Querrichtung Q ausgerichtet sowie zusätzlich in Fahrzeuglängsrichtung gekippt.

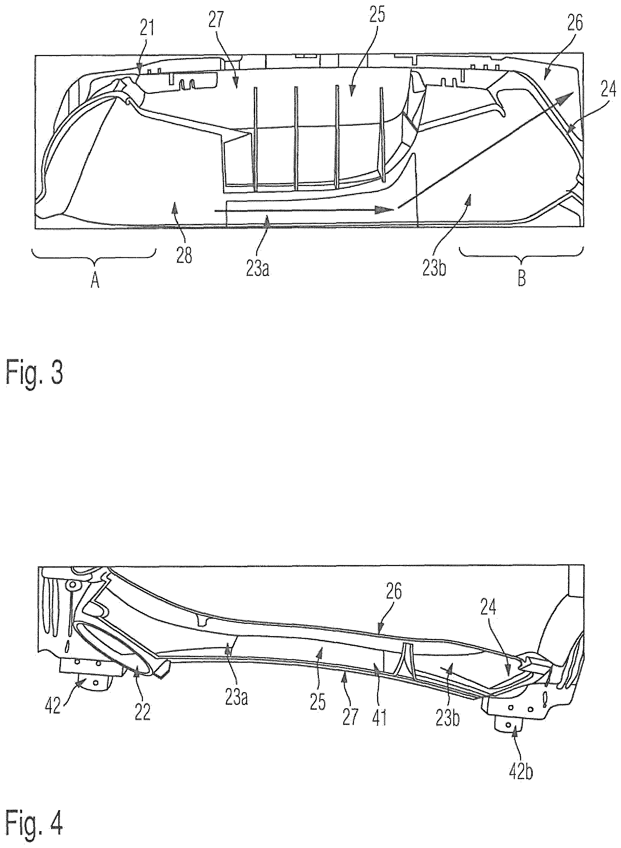

Diese Anordnung ermöglicht, dass der Lautsprecher 29 im Bereich einer ersten Seite A des Top-Case 10, genauer: der Deckelanordnung 12, und die Austrittsöffnung 24 des hornförmigen Kanals 23 im Bereich einer der ersten Seite A entgegengesetzt angeordneten zweiten Seite B des Top-Case 10 beziehungsweise der Deckelanordnung 12 angeordnet sind. Wie in Fig. 2 dargestellt, ist die Lautsprecheraufnahme 22 und damit auch eine Lautsprechervorderseite des hierin einzusetzenden Lautsprechers seitlich und in Richtung der Vorderseite des Top-Case sowie nach oben gekippt angeordnet, so dass mittels des Lautsprechers 29 auf dessen Lautsprechervorderseite im Bereich der ersten Seite A Schall emittieren werden kann. Ein auf seiner Rückseite emittierter Rückschall wird über eine in dem hornförmigen Kanal 23 bereitgestellte Luftsäule in Richtung der Austrittsöffnung 24 übertragen und tritt dort aus (Verlauf siehe Pfeilmarkierung in Fig. 3). Auf diese Weise kann trotz einseitiger Positionierung des Lautsprechers 29 ein beidseitiges Klangerlebnis für den Sozius erzeugt werden, ohne auf beiden Seiten einen entsprechenden Lautsprecher vorsehen zu müssen. Auf den zweiten Lautsprecher sowie einen üblicherweise erforderlichen zusätzlichen Verstärker kann verzichtet werden.

Zusätzlich umfasst das Lautsprechergehäuse 21 eine Druckkammer 25. Diese schließt an die Rückseite des Lautsprechers 29 luftleitend an und erstreckt sich parallel zu dem Rohrabschnitt 23a des hornförmigen Kanals 23.

Wie aus Fig. 2 erkennbar ist das Lautsprechergehäuse 21 einerseits durch eine Innenschale 26 gebildet, welche in der dargestellten Ausführungsform einstückig mit einem Deckelelement 12a der Deckelanordnung 12 einstückig ausgebildet ist. Andererseits wird das Lautsprechergehäuse 21 durch eine mit der Innenschale 26 verbundene Außenschale 27 gebildet. Die Außenschale 27 ist im Bereich der Vorderseite des Top-Case 10 beziehungsweise der gesamten Deckelanordnung 12 auf die Innenschale 26 aufgesetzt, um gemeinsam das Lautsprechergehäuse 21 zu definieren.

Diese Anordnung eignet sich auch für komplizierte Geometrien und kann besonders einfach beispielsweise mittels Spritzguss der Innenschale 26 und/oder der Außenschale 27 hergestellt werden.

Fig. 3 zeigt eine frontale Schnittansicht des integrierten Lautsprechergehäuses 21, wobei die Schnittebene parallel zu der Betrachtungsebene aus Fig. 2 liegt. Erkennbar sind die Lautsprecheraufnahme 22 für den lediglich schematisch angedeuteten Lautsprecher, sowie der Rohrabschnitt 23b des hornförmigen Kanals 23, sowie der in seinem Verlauf in Richtung der Austrittsöffnung 24 in seinem Querschnitt aufgeweitete Hornabschnitt 23b. Ebenfalls erkennbar ist der zu der Lautsprecheraufnahme 22 zugeordneter Aufnahmeraum 28, in den eine Rückseite des in der Lautsprecheraufnahme 22 aufgenommenen Lautsprechers 29 hineinragt. Der Aufnahmeraum 28 ist luftleitend mit dem Rohrabschnitt 23a sowie der Druckkammer 25 verbunden. Hierzu ist der Aufnahmeraum 28 gegenüber der Druckkammer 25 und dem Rohrabschnitt 23a geöffnet.

Fig. 4 zeigt eine horizontal geschnittene Draufsicht des integrierten Lautsprechergehäuses 21 mit Blick in die Druckkammer 25. Erkennbar ist ebenfalls die Lautsprecheraufnahme 22, der Aufnahmeraum 28, der damit verbundene Rohrabschnitt 23b (sichtbar ist lediglich dessen Eingang), sowie die Austrittsöffnung 24 am Ende des aufgeweiteten Hornabschnitts 23b. Fig. 4 zeigt zusätzlich einen Teil der mit dem Aufnahmeraum 28 luftleitend verbundenen Druckkammer 25, die über eine Trennwand 41 von dem Rohrabschnitt 23a abgetrennt ist.

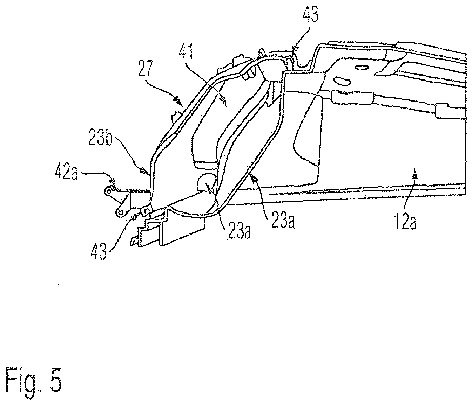

In Fig. 5 ist eine geschnittene Seitenansicht des integrierten Lautsprechergehäuses 21 mit Blick in den Hornabschnitt 23b dargestellt. Erkennbar ist der aufgeweitete Querschnitt des Hornabschnitts 23b und der damit verbundene Rohrabschnitt 23a. Zusätzlich ist die Trennwand 41 zur Abgrenzung der Druckkammer 25 von dem Rohrabschnitt 23a dargestellt.

Wie aus Fig. 4 und Fig. 5 ersichtlich, wird das Lautsprechergehäuse 21 im Wesentlichen durch die Innenschale 26 und die mit der Innenschale 26 verbundene Außenschale 27 definiert. Beide Schalen 26,27 bilden aufgrund ihrer jeweiligen Kontur gemeinsam den Hohlraum des Lautsprechergehäuses 21.

In der dargestellten Ausführungsform ist die Innenschale 26 einstückig mit dem Deckelelement 12a zu einem einteiligen Bauteil ausgebildet, welches wesentlicher Bestandteil der Deckelanordnung 12 ist. Zusätzlich umfasst die Deckelanordnung 12 mindestens die hiermit verbundene Außenschale 27 und die lediglich in Fig. 1 dargestellte Rückenlehnen-Anordnung 14.

Aufgrund dieser einteiligen Ausgestaltung von Innenschale des Lautsprechergehäuses und Deckelelement 12a begrenzt also eine erste Oberfläche des einteiligen Bauteils einerseits den Hohlraum des Lautsprechergehäuses und eine entgegengesetzte zweite Oberfläche einen Innenraum des Top-Case.

Dies bedeutet, dass ausgehend von dem einteiligen Bauteil, bestehend aus Deckelelement 12a und einstückig verbundener Innenschale 26, durch lokales Aufsetzen der Außenschale 27 in einem dem Sozius zugewandten Bereich auf besonders vorteilhafte Weise ein Lautsprechergehäuse gebildet und somit in das Top-Case integriert werden kann. Wie beschrieben, kann die Außenschale 27 zusätzlich von der Rückenlehne 14 abgedeckt werden.

Um eine optimale Funktionsweise des Lautsprechergehäuses 21 zu erzielen, sind die Außenschale 27 und die Innenschale 26 mittels einer oder mehrerer Dichtungen 43, insbesondere einer umlaufenden Dichtung, luftdicht miteinander verbunden.

Für eine zusätzliche Funktionsintegration und Reduzierung zu verbauender Bauteile, umfasst die Außenschale 27 optional zwei Scharnierteile 42a,42b zur drehbeweglichen Verbindung mit zugehörigen Scharniergegenstücken, die beispielsweise in der Bodenanordnung (hier: an dem Bodenelement 11) des Top-Case 10 vorgesehen sind und gemeinsam die jeweiligen Scharniere 13a,13b bilden.

## Patentansprüche

1. Top-Case für ein Kraftfahrzeug, insbesondere ein Motorrad oder ein motorradähnliches Kraftfahrzeug, umfassend eine integrierte Lautsprecheranordnung (20) mit einem Lautsprechergehäuse (20) und mindestens einem mit dem Lautsprechergehäuse (21) verbundenen Lautsprecher (29), wobei das Top-Case (10) zumindest abschnittsweise das Lautsprechergehäuse (21) bildet, wobei das Lautsprechergehäuse (21) einen mit einer Rückseite des Lautsprechers (29) luftleitend verbundenen, hornförmigen Kanal (23) umfasst,
**dadurch gekennzeichnet, dass** der hornförmige Kanal zumindest einen Rohrabschnitt (23a) und einen zu einer Austrittsöffnung (24) des hornförmigen Kanals hin aufgeweiteten Hornabschnitt (23b) umfasst, wobei ein Eingang des Rohrabschnittes (23a) der Rückseite des Lautsprechers beziehungsweise einem Aufnahmeraum (28) einer zugehörigen Lautsprecheraufnahme (22) zugewandt und mit dieser luftleitend verbunden ist, und der Rohrabschnitt (23a) in seinem weiteren Verlauf in den Hornabschnitt (23b) mündet, der sich entlang seines Verlaufs bis hin zu der Austrittsöffnung (24) an einem entfernten Ende des Hornabschnitts (23b) aufweitet.

2. Top-Case nach Anspruch 1, **dadurch gekennzeichnet, dass** zumindest der Rohrabschnitt (23a) des hornförmigen Kanals (23) im Wesentlichen parallel zu einer Vorderseite des Top-Case (10) ausgerichtet ist.

3. Top-Case nach mindestens einem der Ansprüche 1 bis 2, **dadurch gekennzeichnet, dass** der Lautsprecher (29) im Bereich einer ersten Seite (A) des Top-Case (10) und die Austrittsöffnung (24) des hornförmigen Kanals (23) im Bereich einer der ersten Seite (A) entgegengesetzt angeordneten zweiten Seite (B) des Top-Case (10) angeordnet sind.

4. Top-Case nach mindestens einem der Ansprüche 1 bis 3, **dadurch gekennzeichnet, dass** das Lautsprechergehäuse (21) eine Druckkammer (25) umfasst.

5. Top-Case nach mindestens einem der Ansprüche 1 bis 4, **dadurch gekennzeichnet, dass** das Lautsprechergehäuse (21) zumindest abschnittsweise durch eine Innenschale (26) und eine mit der Innenschale (26) verbundene Außenschale (27) gebildet ist, insbesondere eine mittels Spritzguss hergestellte Innenschale (26) und/oder Außenschale (27).

6. Top-Case nach Anspruch 5, **dadurch gekennzeichnet, dass** die Innenschale (26) einstückig mit einem Deckelelement (12a) oder einem Bodenelement (11 a) des Top-Case (10) verbunden ist.

7. Top-Case nach mindestens einem der Ansprüche 5 bis 6, **dadurch gekennzeichnet, dass** die Außenschale (27) mindestens ein integriertes Scharnierteil (42a) umfasst, welches zur drehbeweglichen Verbindung mit einem Scharniergegenstück eines Bodenelements (11) oder eines Deckelelements (12a) des Top-Case (10) ausgebildet ist.

8. Top-Case nach mindestens einem der Ansprüche 1 bis 7, **dadurch gekennzeichnet, dass** der Lautsprecher (29) ein Tieftonlautsprecher ist, insbesondere ein Tieftonlautsprecher mit einem Frequenzbereich f ≤ 400 Hz.

9. Top-Case nach mindestens einem der Ansprüche 1 bis 8, **dadurch gekennzeichnet, dass** das Top-Case (10) eine Rückenlehnen-Anordnung (14) für einen Fahrzeugnutzer umfasst, wobei die Rückenlehnen-Anordnung (14) die Außenschale (27) zumindest abschnittsweise oder vollständig abdeckt.

## Claims

1. Top case for a motor vehicle, in particular a motorcycle or a motor vehicle similar to a motorcycle, comprising an integrated loudspeaker arrangement (20) having a loudspeaker housing (20) and at least one loudspeaker (29) that is connected to the loudspeaker housing (21), wherein the top case (10) at least in portions forms the loudspeaker housing (21), wherein the loudspeaker housing (21) comprises a horn-shaped duct (23) that in an air-conducting manner is connected to a rear side of the loudspeaker (29),
**characterized in that** the horn-shaped duct comprises at least one tubular portion (23a) and one horn portion (23b) that is widened towards an exit opening (24) of the horn-shaped duct, wherein an entry of the tubular portion (23a) faces and is connected in an air-conducting manner to the rear side of the loudspeaker or a receptacle space (28) of an associated loudspeaker receptacle (22), and the tubular portion (23a) in the further profile thereof opens into the horn portion (23b) which along the profile thereof widens up to the exit opening (24) at a distal end of the horn portion (23b) .

2. Top case according to Claim 1, **characterized in that** at least the tubular portion (23a) of the horn-shaped duct (23) is aligned so as to be substantially parallel with a front side of the top case (10).

3. Top case according to at least one of Claims 1 to 2, **characterized in that** the loudspeaker (29) is disposed in the region of a first side (A) of the top case (10), and the exit opening (24) of the horn-shaped duct (23) is disposed in the region of a second side (B) of the top case (10) that is disposed so as to be opposite the first side (A).

4. Top case according to at least one of Claims 1 to 3, **characterized in that** the loudspeaker housing (21) comprises a pressure chamber (25).

5. Top case according to at least one of Claims 1 to 4, **characterized in that** the loudspeaker housing (21) at least in portions is formed by an inner shell (26) and by an outer shell (27) that is connected to the inner shell (26), in particular an inner shell (26) and/or outer shell (27) produced by means of injection moulding.

6. Top case according to Claim 5, **characterized in that** the inner shell (26) is integrally connected to a cover element (12a) or a lid element (11a) of the top case (10).

7. Top case according to at least one of Claims 5 to 6, **characterized in that** the outer shell (27) comprises at least one integrated hinge part (42a) which is configured for connecting in a rotatable manner to a hinge counterpart of a base element (11) or a lid element (12a) of the top case (10).

8. Top case according to at least one of Claims 1 to 7, **characterized in that** the loudspeaker (29) is a low-range loudspeaker, in particular a low-range loudspeaker having a frequency range f ≤ 400 Hz.

9. Top case according to at least one of Claims 1 to 8, **characterized in that** the top case (10) comprises a backrest arrangement (14) for a vehicle user, wherein the backrest arrangement (14) covers the outer shell (27) at least in portions or in full.

## Revendications

1. Top-case pour un véhicule automobile, en particulier une motocyclette ou un véhicule automobile de type motocyclette, comprenant un agencement de haut-parleur intégré (20) avec un boîtier de haut-parleur (20) et au moins un haut-parleur (29) connecté au boîtier de haut-parleur (21), le top-case (10) formant au moins en partie le boîtier de haut-parleur (21),
le boîtier de haut-parleur (21) comprenant un canal (23) en forme de corne, raccordé à un côté arrière du haut-parleur (29) en guidant l'air, **caractérisé en ce que** le canal en forme de corne comprend au moins une portion tubulaire (23a) et une portion de corne élargie (23b) vers une ouverture de sortie (24) du canal en forme de corne,
une entrée de la portion tubulaire (23a) étant tournée vers le côté arrière du haut-parleur ou vers un espace de réception (28) d'un logement de haut-parleur associé (22) et étant raccordée à celui-ci en guidant l'air et
la portion tubulaire (23a), dans la suite de son étendue, débouchant dans la portion de corne (23b) qui s'élargit le long de son étendue jusqu'à l'ouverture de sortie (24) à une extrémité éloignée de la portion de corne (23b).

2. Top-case selon la revendication 1, **caractérisé en ce qu'**au moins la portion tubulaire (23a) du canal en forme de corne (23) est orientée essentiellement parallèlement à un côté avant du top-case (10).

3. Top-case selon au moins l'une des revendications 1 et 2, **caractérisé en ce que** le haut-parleur (29) est disposé dans la région d'un premier côté (A) du top-case (10) et l'ouverture de sortie (24) du canal en forme de corne (23) est disposée dans la région d'un deuxième côté (B) du top-case (10) disposé à l'opposé du premier côté (A).

4. Top-case selon au moins l'une des revendications 1 à 3, **caractérisé en ce que** le boîtier de haut-parleur (21) comprend une chambre de pression (25) .

5. Top-case selon au moins l'une des revendications 1 à 4, **caractérisé en ce que** le boîtier de haut-parleur (21) est formé au moins en partie par une coque intérieure (26) et une coque extérieure (27) raccordée à la coque intérieure (26), en particulier une coque intérieure (26) et/ou une coque extérieure (27) fabriquées par moulage par injection.

6. Top-case selon la revendication 5, **caractérisé en ce que** la coque intérieure (26) est raccordée d'une seule pièce à un élément de couvercle (12a) ou à un élément de fond (11a) du top-case (10).

7. Top-case selon au moins l'une des revendications 5 et 6, **caractérisé en ce que** la coque extérieure (27) comprend au moins une partie de charnière intégrée (42a), laquelle est réalisée pour une liaison déplaçable en rotation avec une pièce de charnière conjuguée d'un élément de fond (11) ou d'un élément de couvercle (12a) du top-case (10).

8. Top-case selon au moins l'une des revendications 1 à 7, **caractérisé en ce que** le haut-parleur (29) est un haut-parleur de grave, en particulier un haut-parleur de grave avec une plage de fréquences f ≤ 400 Hz.

9. Top-case selon au moins l'une des revendications 1 à 8, **caractérisé en ce que** le top-case (10) comprend un agencement de dossier (14) pour un utilisateur du véhicule, l'agencement de dossier (14) recouvrant la coque extérieure (27) au moins en partie ou complètement.
